# EUROPEAN PATENT SPECIFICATION

(11) **EP 4 111 670 B1**
(45) Date of publication and mention of the grant of the patent: **30.09.2026**
(21) Application number: 21717403.6
(22) Date of filing: 07.04.2021
(51) Int. Cl.: H04L 45/302, H04L 45/02, H04L 45/24, H04L 47/125

(54) **DISTRIBUTED LOAD BALANCING IN A MULTI-DOMAIN NETWORK**
VERTEILTER LASTAUSGLEICH IN EINEM MEHRDOMÄNENNETZWERK
ÉQUILIBRAGE DE CHARGE DISTRIBUÉE DANS UN RÉSEAU À DOMAINES MULTIPLE

(43) Date of publication of application: 04.01.2023
(73) Proprietor: HUAWEI TECHNOLOGIES CO., LTD., Shenzhen, Guangdong 518129 (CN)
(72) Inventor: LEGUAY, Jeremie, 80992 Munich (DE); MARTIN, Sebastien, 80992 Munich (DE); MEDAGLIANI, Paolo, 80992 Munich (DE)
(74) Representative: Roth, Sebastian
(86) International application number: PCT/EP2021/058983
(87) International publication number: WO 2022/214164

(56) References cited:
- EP-A1- 2 479 940
- EP-A1- 2 663 035
- US-A1- 2006 209 891

## Description

### TECHNICAL FIELD

The present disclosure relates to the routing of packets in a network, in particular, relates to load-balancing flows of packets in a multi-domain network. The disclosure proposes a first network node for distributed load-balancing in the multi-domain network and a corresponding method. The distributed load-balancing is performed based on a Quality of Service (QoS) quota.

### BACKGROUND

Load balancing plays a crucial role in improving network utilization. The idea of load-balancing is to split traffic over multiple paths to a destination, in order to make a better use of the network capacity.

Typically, load-balancing (or flow splitting) is implemented inside network elements, such as switches and routers, by using two techniques:
1) hash-based splitting, wherein a hash value is calculated over significant fields of packet headers of packets of one or more flows, and is used to select the outgoing paths.
2) Weighted Cost Multi Pathing (WCMP), wherein load-balancing weights are used to make sure that the number of flows of packets on each outgoing path meets a certain ratio.

In both cases, once a decision is taken for a certain flow, all packets of this flow generally follow the same decision (i.e., are routed along the same path).

The most popular distributed load-balancing mechanism is Equal-Cost Multi-Path (ECMP) routing, which uniformly divides traffic across multiple paths between a packet source (origin) and the packet destination. Paths with equal Internal Gateway Protocol (IGP) costs are automatically identified and activated to load-balance packet flows. However, this mechanism does not aim at satisfying end-to-end QoS requirements.

Software-Defined Networking (SDN) controllers or Path Computation Elements (PCE) integrate traffic engineering methods to continuously optimize routing and load-balancing. These centralized control plane entities leverage on a global view of the network, to decide whether it is necessary to split flows, and to determine the most efficient way to do it given the statistic on network load and traffic flows. However, these solutions require the presence of a centralized network controller, which may not be desirable for scalability, fault-tolerance, or deployment reasons.

Thus, to meet end-to-end QoS requirements, conventional load-balancing solutions require the full control - at the source or at a centralized controller - over a set of paths towards the destination. As the source thus requires a lot of information about the topology of the network and its states, these solutions are difficult to implement in large Internet Protocol (IP) networks.

Thus, there is need for improved load-balancing solutions.

EP 2663035 A1 discloses a method, node device, and system for establishing a label switched path, which belong to the field of communications technologies.

US 2006209891 A1 discloses including information about a plurality of access networks that a user terminal can access in a QoS request message, such that a QoS control server can optimally allocate resources in the current environment of the user terminal and assure QoS.

EP 2479940 A1 discloses a pseudowire setup method and a node device for ensuring the QoS of the established pseudowire.

### SUMMARY

This invention is defined by the appended claims.

The present disclosure and its embodiments are based on the following further considerations.

Large IP networks are generally decomposed into multiple network domains. Each domain is interconnected to others by one or more border network nodes (e.g., routers). In this context, end-to-end paths are composed of sub-paths, one for each traversed domain, that are stitched together at the border network nodes. The availability of several border network nodes to enter into each subsequent domain creates an opportunity to build a domain-by-domain multi-path routing solution (in analogy to hop-by-hop routing). An advantage of such a solution is that the source does not require the full knowledge of the network topology, and that load-balancing decisions could be taken at the ingress border network nodes of each consecutive domain.

However, the main issue when trying to satisfy end-to-end QoS requirements is that there is currently no way to propagate the end-to-end QoS constraint, so that the ingress border network nodes can select an appropriate set of outgoing border network nodes in each domain to load-balance traffic.

Load-balancing in IP networks can be done with ECMP. While the IGP protocol routes traffic over a shortest path from a source to a destination based on IGP metrics, e.g., delay, hop count, the ECMP can automatically load-balance flows over parallel shortest paths when available. However, ECMP cannot satisfy end-to-end QoS requirements.

Other solutions such as instant Congestion Assessment Network (iCAN) perform flow-based load-balancing solutions using in-band telemetry. However, these solutions require a full control of the routing paths from the source.

In the context of inter-domain routing, wherein domains are interconnected by several border network nodes, distributed and centralized solutions have been proposed for Multiprotocol Label Switching (MPLS). Further, the Backward-Recursive PCE-Based Computation (BRPC) solution performs distributed multi-domain path computation. A path tree is computed backwards from the destination domain to the initial domain, in a distributed way. The source domain aggregates all the information and decides the end-to-end path. In the centralized solution called hierarchical PCE, children PCEs compute border-to-border metrics and send them to a parent PCE. The parent PCE computes the optimal domain sequence and optimal border node succession and sends it to the children PCEs to install the end-to-end path. However, these two approaches do not support hop-by-hop routing decisions to meet end-to-end QoS constraints as the path is determined either by source node or by the centralized controller.

For Internet routing, BGP extensions have been proposed so that border network nodes can advertise alternative paths and enforce a load-balancing routing policy. However, once the traffic goes into the subsequent domain, the border network nodes are no longer aware of how much QoS has been consumed, and the end-to-end QoS constraint does not propagate.

To increase the routing flexibility in IGP protocols, Multi-Topology Routing (MTR) extensions have been proposed for Open Shortest Path First (OSPF) and Intermediate System to Intermediate System (IS-IS), for instance. In this case, the protocol maintains a separate Routing Information Base (RIB) and Forwarding Information Base (FIB) for each topology. The RIB is filled by received Link State Advertisements (LSAs) for the different topologies. Topologies provide alternative paths inside each domain, but ingress nodes are not aware of end-to-end constraints to select the right topology, it mainly operates at the moment in a single area or domain.

In view of the above, the present disclosure aims to improve load-balancing in a multi-domain network. An objective is to enable load-balancing in the multi-domain network that meets end-to-end QoS constraints. Another objective is to remove the requirement of central controller.

The objective is achieved by this disclosure as described in the enclosed independent claims. Advantageous implementations of the embodiments are further defined in the dependent claims.

In particular, this disclosure proposes a distributed load-balancing of packet flows that leverages redundant paths that are inherently available from the multi-domain decomposition of the network. Network nodes according to embodiments of this disclosure are able to operate in a totally distributed manner, in order to load-balance traffic over multiple paths that meet one or more end-to-end QoS constraints. Accordingly, neither a source node nor a central controller needs to have a full control of paths towards the destination network node(s) of the packets, and decisions can be taken domain-by-domain.

A first aspect of this disclosure provides a first network node for distributed load-balancing and arrangement in a first domain of a multi-domain network, wherein the first network node is configured to: obtain one or more packets to be routed to a destination network node arranged in the multi-domain network outside the first domain; and wherein the first network node is further configured to, for a packet of the one or more packets: determine one or more second network nodes based on an available QoS quota and one or more required QoS quotas, wherein each of the required QoS quotas is required to route the packet from the first network node to one of the second network nodes; select one of the one or more second network nodes; edit QoS information in a header of the packet based on the available QoS quota and the required QoS quota that is required to route the packet from the first network node to the selected second network node, so that the QoS information indicates a first remaining QoS quota that remains when the packet has reached the selected second network node; and route the packet towards the selected second network node.

The first network node supports the distributed load-balancing in the multi-domain network. It may be a source node of the packet (flow), or may receive the packet (flow) from another network node. By using and editing the QoS information including the remaining QoS quota, the first network node enables distributed load-balancing in the multi-domain network that meets end-to-end QoS constraints. The first network node may particularly take a load-balancing decision in the first domain, by selecting the second network node for a packet (flow), and potentially another second network node for another packet (flow). An identical first network node may take the decision for the next domain. For instance, the select second network node may be configured like the first network node, and may perform like the first network node, but with respect to another domain. Due to the distributed load-balancing, the requirement of a central controller or for the source to have full path control are removed.

In an implementation form of the first aspect, the first network node is further configured to obtain a plurality of packets to be routed to the destination network node, wherein the plurality of packets belongs to at least a first flow and a second flow; select at least two second network nodes for the plurality of packets; and route the packets of the first flow to one of the at least two second network nodes and route the packets of the second flow to another one of the at least two second network nodes.

In an implementation form of the first aspect, the first network node is further configured to load-balance at least the first flow and the second flow by selecting the at least two second network nodes and routing the packets of the flows towards the at least two selected second network nodes, respectively.

In this way, the first network node supports the distributed load-balancing with the end-to-end QoS constraint.

In an implementation form of the first aspect, a type of each QoS quota comprises at least one of the following: a delay quota; a jitter quota; a cost quota; a hop-count quota.

Thus, different types of QoS metrics may be used. The QoS quota type may be the same or may be different for two domains of the multi-domain network. Multiple QoS quota types may be used. Accordingly, also different kinds of end-to-end QoS constraints may be respected.

In an implementation form of the first aspect, the first network node is further configured to select a routing strategy for routing the one or more packets in the first domain; wherein a type of each QoS quota depends on the selected routing strategy.

In an implementation form of the first aspect, the routing strategy comprises one of: shortest delay; lowest hop-count; lowest cost; smallest jitter.

For instance, for "shortest delay", the "delay quota" may be used. For "lowest hop-count", the "hop-count quota" may be used. For "lowest cost", the "cost quota" may be used. For "smallest jitter", the "jitter quota" may be used.

In an implementation form of the first aspect, the first network node is further configured to include the selected routing strategy into the header of each packet.

The selected routing strategy may be added to the QoS quota into the QoS information. However, different parts (e.g., fields) of the header may also be used for routing strategy and QoS quota. For example, different labels may respectively contain the selected routing strategy and the QoS quota.

In an implementation form of the first aspect, the first network node is a source node for the one or more packets, and is configured to: prepare the one or more packets; wherein the first network node is further configured to, for each packet: determine the available QoS quota according to an end-to-end QoS constraint for routing the one or more packets to the destination node; and edit the QoS information in the header of the packet by adding it into the header, so that it indicates the first remaining QoS quota that remains when the packet has reached the selected second network node.

In an implementation form of the first aspect, the first network node is further configured to: receive the one or more packet from one or more network nodes arranged in a second domain of the multi-domain network, wherein the header of each received packet includes QoS information indicating a second remaining QoS quota that remains after the packet has reached the first network node; wherein the first network node is further configured to, for each packet: determine the available QoS quota according to the second remaining QoS quota of the packet; and edit the QoS information in the header of the packet by modifying it so that it indicates the first remaining QoS quota that remains when the packet has reached the selected second network node.

In an implementation form of the first aspect, the first network node is further configured to estimate the required QoS quotas that are required to route the one or more packets to respectively each of the second network nodes.

This may be done based on an advertisement (see below), or based on some measurement performed by the first network node.

In an implementation form of the first aspect, the first network node is further configured to: receive a first advertisement from one or more network nodes configured to interact with a third domain of the multi-domain network, wherein the first advertisement indicates a set of required QoS quotas that are required for a packet to be routed from respectively the one or more network nodes to the destination node, wherein each of the required QoS quotas relates to a different routing path to the destination node; and select the one or more second network nodes, from the one or more network nodes, configured to interact with the third domain, based further on the first advertisement.

In this way, the distributed load-balancing is further supported. The first network node can select the second network node more appropriately to fulfil the end-to-end QoS constraint.

In an implementation form of the first aspect, the first network node is arranged at a border between the first domain and the second domain; and/or the one or more second network nodes are arranged at a border between the first domain and the third domain.

Accordingly, the first network node is a border network node, and/or the one or more second network nodes are border network nodes, of the respective domains.

In an implementation form of the first aspect, the first network node is further configured to provide a second advertisement indicating a set of required QoS quotas that are required for a packet to be routed from the first network node to the destination node, wherein each of the required QoS quotas relates to a different routing path to the destination node.

In an implementation form of the first aspect, at least one of the first advertisement and the second advertisement indicates multiple sub-sets of required QoS quotas, wherein each sub-set of required QoS quotas comprises QoS quotas of a different type.

Thus, different QoS quota can be used to fulfil different end-to-end QoS constraints.

In an implementation form of the first aspect, the first network node is further configured to include at least one of the following into a first outer label of a label stack in the header of each packet: the QoS information; an identifier of the selected second network; a routing strategy for routing the one or more packets in the first domain.

In an implementation form of the first aspect, the first network node is further configured to: determine the available QoS quota for each received packet according to QoS information in a second outer label of a label stack in the header of the received packet; and remove the second outer label from the label stack in the header of the received packet.

Accordingly, the first network node is configured to support segment routing.

A second aspect of this disclosure provides a method for distributed load-balancing in a multi-domain network, wherein the method is performed by a first network node arranged in a first domain of the multi-domain network, and comprises: obtaining one or more packets to be routed to a destination network node arranged in the multi-domain network outside of the first domain; and wherein the method further comprises, for a packet of the one or more packets: determining one more second network nodes based on an available QoS quota and one or more required QoS quotas, wherein each of the required QoS quotas is required to route the packet from the first network node to one of the second network nodes; selecting one of the one or more second network nodes; editing QoS information in a header of the packet based on the available QoS quota and the required QoS quota that is required to route the packet from the first network node to the selected second network node, so that the QoS information indicates a first remaining QoS quota that remains when the packet has reached the selected second network node; and routing the packet towards the selected second network node.

In an implementation form of the second aspect, the method further comprises obtaining a plurality of packets to be routed to the destination network node, wherein the plurality of packets belongs to at least a first flow and a second flow; selecting at least two second network nodes for the plurality of packets; and routing the packets of the first flow to one of the at least two second network nodes and routing the packets of the second flow to another one of the at least two second network nodes.

In an implementation form of the second aspect, the method further comprises load-balancing at least the first flow and the second flow by selecting the at least two second network nodes and routing the packets of the flows towards the at least two selected second network nodes, respectively.

In an implementation form of the second aspect, a type of each QoS quota comprises at least one of the following: a delay quota; a jitter quota; a cost quota; a hop-count quota.

In an implementation form of the second aspect, the method further comprises selecting a routing strategy for routing the one or more packets in the first domain; wherein a type of each QoS quota depends on the selected routing strategy.

In an implementation form of the second aspect, the routing strategy comprises one of: shortest delay; lowest hop-count; lowest cost; smallest jitter.

In an implementation form of the second aspect, the method further comprises including the selected routing strategy into the header of each packet.

In an implementation form of the second aspect, the first network node is a source node for the one or more packets, and the method comprises: preparing the one or more packets; wherein the method further comprises, for each packet: determining the available QoS quota according to an end-to-end QoS constraint for routing the one or more packets to the destination node; and editing the QoS information in the header of the packet by adding it into the header, so that it indicates the first remaining QoS quota that remains when the packet has reached the selected second network node.

In an implementation form of the second aspect, the method further comprises receiving the one or more packets from one or more network nodes arranged in a second domain of the multi-domain network, wherein the header of each received packet includes QoS information indicating a second remaining QoS quota that remains after the packet has reached the first network node; and wherein the method further comprises, for each packet: determining the available QoS quota according to the second remaining QoS quota of the packet; and editing the QoS information in the header of the packet by modifying it so that it indicates the first remaining QoS quota that remains when the packet has reached the selected second network node.

In an implementation form of the second aspect, the method further comprises estimating the required QoS quotas that are required to route the one or more packets to respectively each of the second network nodes.

In an implementation form of the second aspect, the method further comprises: receiving a first advertisement from one or more network nodes configured to interact with a third domain of the multi-domain network, wherein the first advertisement indicates a set of required QoS quotas that are required for a packet to be routed from respectively the one or more network nodes to the destination node, wherein each of the required QoS quotas relates to a different routing path to the destination node; and selecting the one or more second network nodes, from the one or more network nodes, configured to interact with the third domain, based further on the first advertisement.

In an implementation form of the second aspect, the first network node is arranged at a border between the first domain and the second domain; and/or the one or more second network nodes are arranged at a border between the first domain and the third domain.

In an implementation form of the second aspect, the method further comprises providing a second advertisement indicating a set of required QoS quotas that are required for a packet to be routed from the first network node to the destination node, wherein each of the required QoS quotas relates to a different routing path to the destination node.

In an implementation form of the second aspect, at least one of the first advertisement and the second advertisement indicates multiple sub-sets of required QoS quotas, wherein each sub-set of required QoS quotas comprises QoS quotas of a different type.

In an implementation form of the second aspect, the method further comprises including at least one of the following into a first outer label of a label stack in the header of each packet: the QoS information; an identifier of the selected second network; a routing strategy for routing the one or more packets in the first domain.

In an implementation form of the second aspect, the method further comprises: determining the available QoS quota for each received packet according to QoS information in a second outer label of a label stack in the header of the received packet; and removing the second outer label from the label stack in the header of the received packet.

A third aspect of this disclosure provides a computer program comprising a program code which, when executed by a processor of a network node, causes the network node to perform the method of the second aspect or any of its implementation forms.

A fourth aspect of this disclosure provides a non-transitory storage medium storing executable program code which, when executed by a processor, causes the method according to the second aspect or any of its implementation forms to be performed.

In summary, an idea of this disclosure is to use a new IP option to carry a "remaining QoS quota" so that the first network node (and likewise, for example, each ingress border network node) can identify a set of feasible second network nodes (for example, outgoing border network nodes) to take load balancing decision in a domain-by-domain fashion. In an example, each border network node router can select the next border network node, and also the routing strategy in the current domain (e.g., the appropriate MTR topology). Thus, the disclosure provides a fully distributed load-balancing solution for multi-domain networks in order to meet end-to-end QoS constraints.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF DRAWINGS

The above described aspects and implementation forms (embodiments) will be explained in the following description of specific embodiments in relation to the enclosed drawings, in which
- FIG. 1: shows a first network node according to an embodiment of this disclosure arranged in a first domain of a multi-domain network.
- FIG. 2: shows an example of a multi-domain network including various network nodes.
- FIG. 3: illustrates a remaining delay quota update performed by network nodes according to embodiments of this disclosure.
- FIG. 4: illustrates a remaining delay quota update in an implementation with segment routing.
- FIG. 5: shows an example of a multi-domain network in an implementation with segment routing.
- FIG. 6: illustrates a path selection and label stack actions in a multi-domain network in an implementation with segment routing.
- FIG. 7: shows an example of a delay quota advertisement across domains.
- FIG. 8: shows a path and delay quota for multi-topology scenarios.
- FIG. 9: shows an example of a node-level advertisement.
- FIG. 10: shows an example of a domain-level advertisement.
- FIG. 11: shows an example of a remaining QoS quota in a packet header.
- FIG. 12: shows a method according to an embodiment of this disclosure.

### DETAILED DESCRIPTION OF EMBODIMENTS

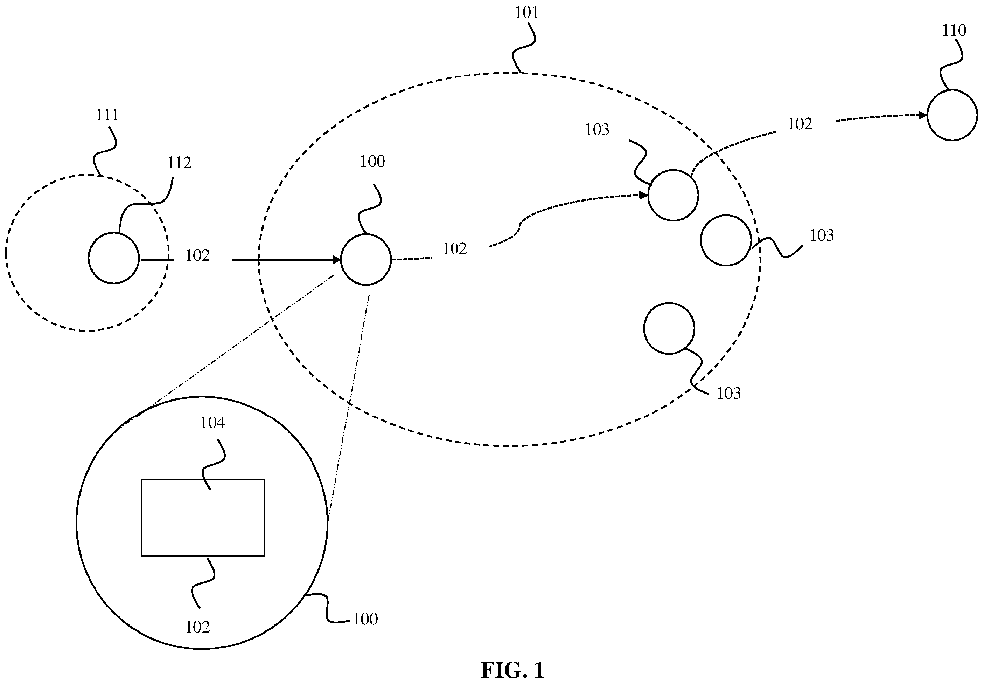

FIG. 1 shows a first network node 100 according to an embodiment of this disclosure. The first network node 100 is configured to contribute to a distributed load-balancing, which is performed (together by multiple network nodes) in a multi-domain network. The first network node 100 is for arrangement in a first domain 101 of the multi-domain network. In FIG. 1 the first network node 100 is arranged in the first domain, and this scenario is considered for the following description. The first network node 100 may, in particular, be arranged at a border of the first domain 101, for example, at a border between the first domain 101 and a second domain 111. That is, the first network node 100 may be a border network node of the first domain 101, in particular, an ingress border network node of the first domain 101. The first network node 100 may be a router or switch. The first network may be a source node for a certain flow of packets 102 and/or may receive a flow of packets 102 from another network node 112, for instance, arranged in the second domain 111 as exemplarily illustrated. That is, in FIG. 1 the first network node 100 is illustrated as not being the source of the flow of packets 102, but this is only as example. In following figures, the first network node 100 will be shown as source network node for a flow of packets 102, also as a non-limiting example.

In any case, the first network node 100 is configured to obtain one or more packets 102 (e.g. of a flow), which are to be routed to a destination network node 110. The destination network node 110 is arranged in the multi-domain network outside the first domain 101, i.e., in another domain (not shown).

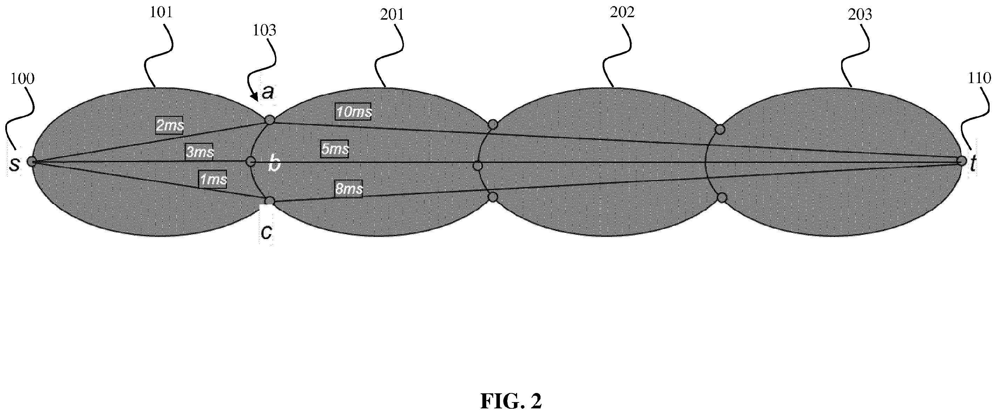

The first network node 100 is further configured to, for a certain packet 102 of the one or more packets 102, determine one or more second network nodes 103 based on an available QoS quota, and based on one or more required QoS quotas. An available QoS quota may thereby be a remaining QoS quota that remains when the packet 102 has reached the first network node 100 (if the first network node 100 is not the source node of that packet 102, as exemplary shown) or may be an end-to-end QoS constraint for routing the packet 102 from the first network node 100 to the destination network node 110 (if the first network node is a source node of that packet 102, as e.g., shown in FIG. 2). Each of the required QoS quotas is required to route the packet 102 from the first network node 100, respectively, to one of the second network nodes 103. The second network nodes 103 may be arranged in the first domain 101 (but do not have to be), and/or may be border network nodes between the first domain 101 and a further domain.

The first network node 100 is further configured to select one of the one or more second network nodes 103, i.e., to determine a selected second network node 103s. Further, the first network node 100 is configured to (see the enlarged portion in FIG. 1) to edit QoS information 104 in a header of the packet 102, based on the available QoS quota and the required QoS quota that is required to route the packet 102 from the first network node 100 to the selected second network node 103s. The first network node 100 is particularly configured to edit the QoS information 104 such, that the QoS information 104 indicates (after the editing) a first remaining QoS quota that remains when the packet 102 has reached the selected second network node 103s.

In the example shown in FIG. 1, the packet 102 may already comprise QoS information 104 when it is received by the first network node 100 (in this case the first network node 100 is not a source node of that packet 102), wherein the QoS information 104 indicates the available QoS quota. That is, the first network node 100 may receive the packet 102 from another network node 112 arranged in the second domain 111 of the multi-domain network (the second domain 111 being arranged before the first domain 101 with respect to the path of the packet 102 from the source network node to the destination network node 110, wherein the other network node 112 may be the source network node). The first network node 100 may be located at a border between the first domain 101 and the second domain 111. The header of the received packet 102 includes the QoS information 104 indicating the remaining QoS quota that remains after the packet 102 has reached the first network node 100, and the first network node 100 is configured to determine the available QoS quota according to this remaining QoS quota of the packet 102. Then, the first network node 100 may edit the QoS information 104 in the header, in this case by modifying it, so that it indicates (after the modification) the remaining QoS quota that remains when the packet 102 has reached the selected second network node 103s. To this end, the first network node may subtract the required QoS quota from the available QoS quota to obtain the remaining QoS quota and modify the packet header accordingly.

In another example (not shown, but e.g. shown in FIG. 2), the packet 102 may be generated or prepared by the first network node 100 (in this case the first network node 100 is a source node of that packet 102). Then, the available QoS quota may be determined by the first network node 100 according to an end-to-end QoS constraint for routing the packet 102 to the destination network node 110. Then, the first network node 100 is configured to edit the QoS information 104 in the header of the packet 102, namely by adding it into the header in the first place (e.g., during generating or preparing the packet 102). The QoS information 104 is thereby configured such by the first network node 100, that the added QoS information 104 indicates the remaining QoS quota that remains when the packet 102 has reached the selected second network node 103s. In particular, the first network node 100 may, to this end, subtract the required QoS quota from the available QoS quota (end-to-end QoS constraint) to obtain the remaining QoS quota.

Notably, a type of each QoS quota in this disclosure may comprise at least one of the following: a delay quota; a jitter quota; a cost quota; a hop-count quota. For instance, the QoS quota may be a delay quota that indicates how much delay is available, remains or is required, respectively, i.e. how high a latency may be allowed to be. A cost quota may be a routing cost, and may refer to an IGP cost and may indicate how much of this cost is needed, or can still be used. A hop-count quota may indicate how many hops are allowed, required, or still available to reach the destination network node 110. A jitter quota may related to the quality of different links in the multi-domain network, and may indicated how much jitter is acceptable overall or for the remaining path to the destination network node 110.

Then, the first network node is configured to route the packet 102 towards the selected second network node 103s.

The first network node 100 may comprise a processor or processing circuitry (not shown) configured to perform, conduct or initiate the various operations of the first network node 100 described herein. The processing circuitry may comprise hardware and/or the processing circuitry may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors. The first network node 100 may further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of the first network node 100 to be performed. In one embodiment, the processing circuitry comprises one or more processors and a non-transitory memory connected to the one or more processors. The non-transitory memory may carry executable program code which, when executed by the one or more processors, causes the first network node 100 to perform, conduct or initiate the operations or methods described herein.

FIG. 2 shows an example of a multi-domain network, which includes the first domain 101, and further includes a third domain 201, fourth domain 202, and fifth domain 203 in which the destination network node 100 is located. Note that - as described above - the "second domain" 111 is not mentioned here, as it is used to refer in this disclosure to a domain arranged before the first domain 101 in the path of a flow of packets 102 from its source node to its destination node. The second domain 111 is not shown here in FIG. 2, since the first network node 100 is exemplarily the source network node of the considered (flow of) packets 102. Accordingly, the first network node 100 in FIG. 2 may prepare the one or more packets 102, and may add the QoS information 104 into the header of the one or more packets 102.

From the first network node 100 (source node **"s"** in FIG. 2) in the first domain 101, three second network nodes 103 (e.g., border network nodes arranged between the first domain 101 and the third domain 201 as shown) can be used to enter the packets 102 into the third domain 201, and the further route the packets 102 towards the destination network node 111 (target node **"t"** in FIG. 2). As also depicted in FIG. 2, a delay quota is used as the QoS quota type in this example shown in FIG. 2. However, the same procedure as shown works also with the other types of QoS quota mentioned above.

The latency needed (i.e., the required QoS quota in this example) from the first network node **s** to the second network nodes **a, b** and **c** is respectively 2ms, 3ms and lms. And the minimum end-to-end latency (i.e., the end-to-end QoS constraint in this example, in particular, an end-to-end delay constraint) from the second network nodes **a, b** and **c** to the destination network node **t** is respectively 10ms, 5ms, and 8ms. In case that the first network node s wants to route packets 102 towards the destination network node **t** under an exemplary end-to-end delay constraint of 10ms, the second network nodes **b** and **c** are the only feasible ones. At the second network nodes **b** and **c,** new sets of further network nodes (e.g., outgoing border network nodes arranged at the border of the third domain 201 and the fourth domain 202) can again be selected. In order to propagate the end-to-end delay constraint, the packets 102 that will be routed through the second network node **b** by the first network node s will carry a QoS information 104 including a remaining delay quota (i.e., the remaining QoS quota in this example) of 7ms in the packets' 102 headers, while packets 102 routed through the second network node **c** will carry a QoS information 104 including a remaining delay quota of 9ms.

The remaining delay quota may be encoded by the first network node 100 based on the estimated (latency) required QoS quota of the sub-path to reach the respective second network nodes 103. Indeed, thanks to a possible advertisement of each of one or more network nodes in the first domain 101 (e.g., advertisement provided by each border network node between the first domain 101 and the third domain 201), the first network node 100 can list all the second network nodes 103 (**a**, **b** or **c)** in the first domain 101), such that the path from **s** to **t** crossing the second network node 103 meets a given end-to-end QoS constraint. By adding a new option in the IP header - which may be called Remaining Metric Quotas (RMQ) and indicates the remaining QoS quota - the first network node 100 can determine the QoS requirement that the selected second network node 103s (**a, b** or **c**) will need to meet. The remaining QoS quota is set by the first network node 100 to the initial end-to-end QoS requirement minus the consumption of the QoS quota before reaching the selected second network node 103s. The new IP option may thus be used to propagate the end-to-end QoS constraint along the path of the packets 102 from source node to destination node 110. This enables the distributed load-balancing performed in the multi-domain network.

In case that several second network nodes 103 are feasible candidates, traffic (flows of packets 102) may be load-balanced over them. In particular, the first network node 100 may load-balance at least a first flow of packets 102 and a second flow of packets 102 by selecting between at least two feasible candidates of second network nodes 103, and by routing the packets 102 of these flows towards the at least two selected second network nodes 103s, respectively. The load-balancing may be recursive, i.e., it can be distributed in a domain-by-domain fashion, and can be executed at each ingress network node of a domain. The overall goal may be to spread the packet flows over different feasible paths with regards to a specific end-to-end QoS constraint, without considering the full path construction at the first network node 100 (or generally at the source network node of the packet flow), and also not at a central controller.

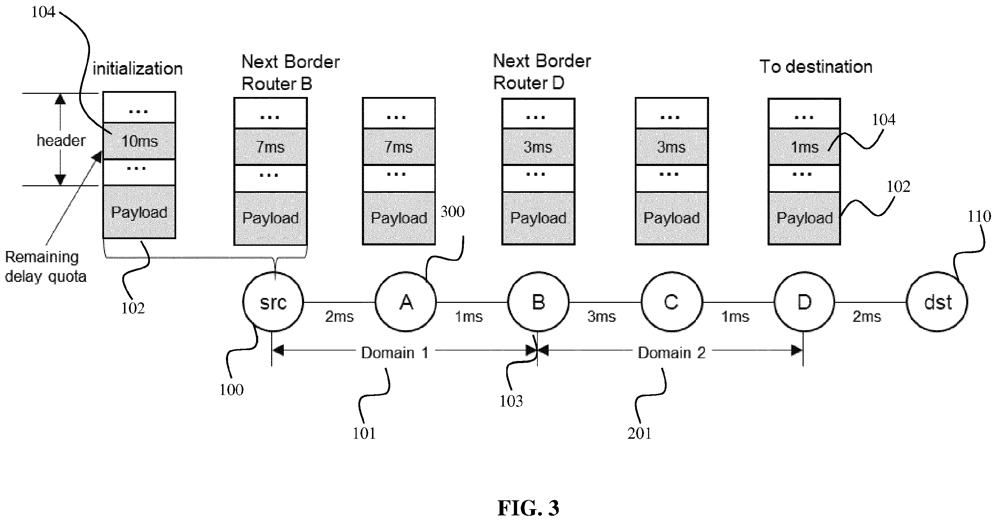

FIG. 3 illustrates an example of updating a remaining QoS quota, particularly a remaining delay quota in this example, in the header of a packet 102 (this may notably be the same for each packet 102 of a flow). This new IP option can be used to propagate the end-to-end QoS constraint. The packet 102 carries QoS information 104 indicating the remaining QoS quota, which QoS information 104 may be injected at the source network node (here as example not the first network node 100) of the packet 102, and may be initialized to an end-to-end QoS constraints. Also multiple end-to-end QoS constraints may be respected and corresponding QoS information 104 may be embedded into the packet header. For instance, an end-to-end delay constraint, and/or an end-to-end routing cost constraint, and/or an end-to-end hop-count constraint, and/or an end-to-end jitter constraint, etc. The remaining QoS quota may be updated by the first network node 100 after receiving the packet 102. The first network node 100 may further select a second network node 103s, which may further update the remaining QoS quota. This may continue per each domain, until the packet 102 reaches the destination network node 110. In particular, each border network node between two domains, e.g. first domain 101 and second domain 202, of the multi-domain network may update the remaining QoS quota. The next border network node may be selected by each border network node, for instance, by the second network node 103s, by *D*_{*q*u*ota*} = *D_{quota}* - *D*_{h*op*}, wherein *D*_{h*op*} is the utilization of the considered QoS topology to go the selected next border network node.

As specifically depicted in the example of FIG. 3, a remaining delay quota as the remaining QoS quota may be maintained in the header of each packet 102, and may be shared by all labels when segment routing is used. Loose binding may be used to load-balance traffic over a set of feasible paths at each border network node. At the ingress network node of each domain 101 201, the next border network node may be selected, for instance, using segment routing (wherein a label is pushed). The selection may be done among the set of feasible options, where D_{quota} ≤ D (the end-to-end QoS constraints). The traffic can be load-balanced over a set of feasible paths towards the next domain.

As described above, the multi-domain network may comprise multiple domains, wherein the domains may share border network nodes, i.e., network nodes located at the border of two neighboring domain. In this disclosure, the concept of a domain may more general than the concept of an Interior Gateway Protocol (IGP) area. For example, it may be hierarchical, i.e., a domain may be the subset of another domain. Intermediate network nodes of a domain may perform conventional packet forwarding in this disclosure, to be compatible with existing network devices. Border network nodes of a domain may make-load balancing decision in this disclosure, to reach the next domain according to the QoS quota (domain-by-domain routing). Inside each domain, several routing strategies may be available. In the case of Multi-Topology Routing (MTR), several IGP topologies can be used by an ingress border network node of a domain to reach the egress border network node of the domain.

The next domain may be selected based on the end-to-end QoS constraint (e.g., the one with minimum delay towards the destination). A Shortest Path First (SPF) algorithm may be used by network nodes inside each domain, wherein the concatenation of domain shortest sub-paths creates end-to-end loop free paths.

Several variants of the distributed load-balancing proposed in this disclosure may be envisioned. For example, flows of packets 102 going to the same destination network node 100 may be load-balanced by using hashing or flow-table based techniques. For example, the distributed load-balancing proposed in this disclosure may apply to the case of MTR in each domain. In this case, an inter-domain QoS quota information can be obtained using a modified Type 3 LSA advertisement.

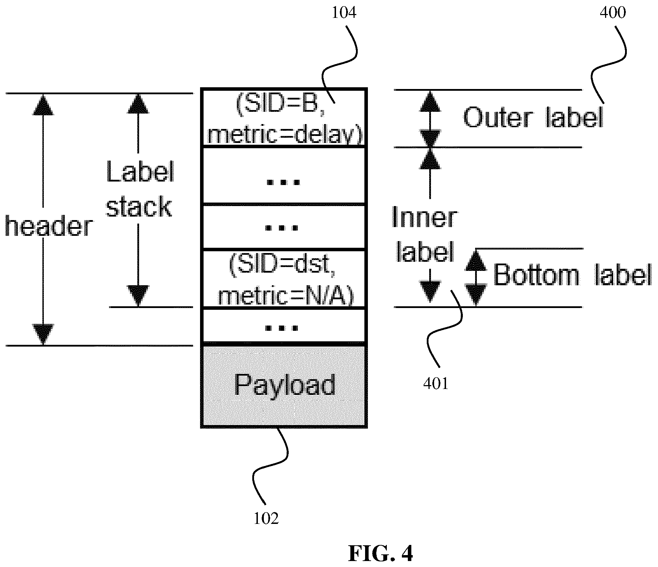

FIG. 4 illustrates a QoS information 104 update, particularly a remaining QoS quota update, in an implementation with segment routing. The implementation with segment routing can be used to control routing. The source network node of a packet 102 (e.g., the first network node 100), and the border network nodes (e.g., the second network nodes 103 at the border of the first domain 101 and the second domain 201), may be configured to push segment routing labels to identify an inter-domain routing policy and a routing strategy (e.g., MTR topology) in each domain. In this context, two types of labels may considered in packet headers: inner and outer labels (of a label stack) as depicted in FIG. 4. The outer label 400 may determine a routing strategy in the current domain. In case MTR is used as routing strategy in a domain, the topology can be identified by a specific IP prefix at the egress border network node (i.e., a Segment Identifier (SID) in segment routing terminology). The inner label 401 may be used to define the destination network node 110 without specifying any routing strategy. Several inner labels 401 can be also used to determine a pre-defined sequence of domains that need to be traversed from source to destination. The bottom inner segment routing label may just define the destination network node 110 without specifying any routing strategy.

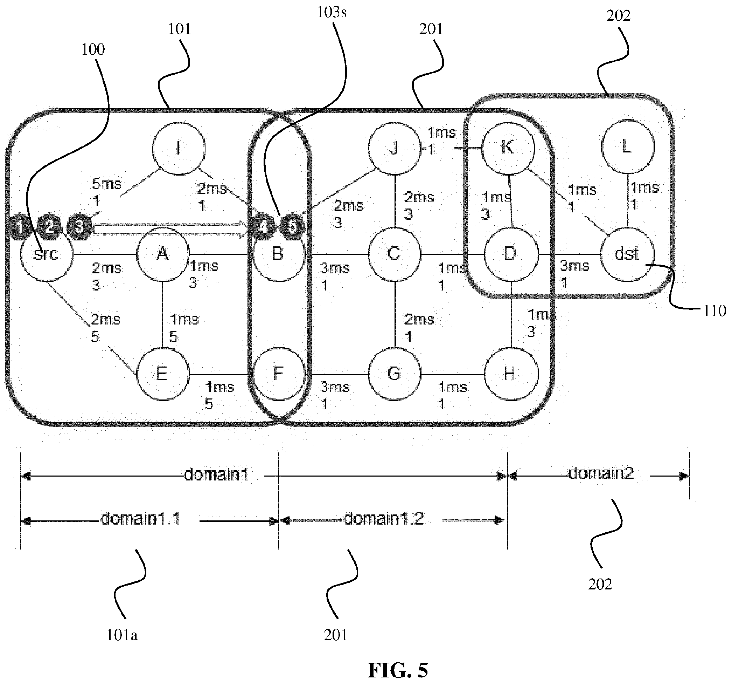

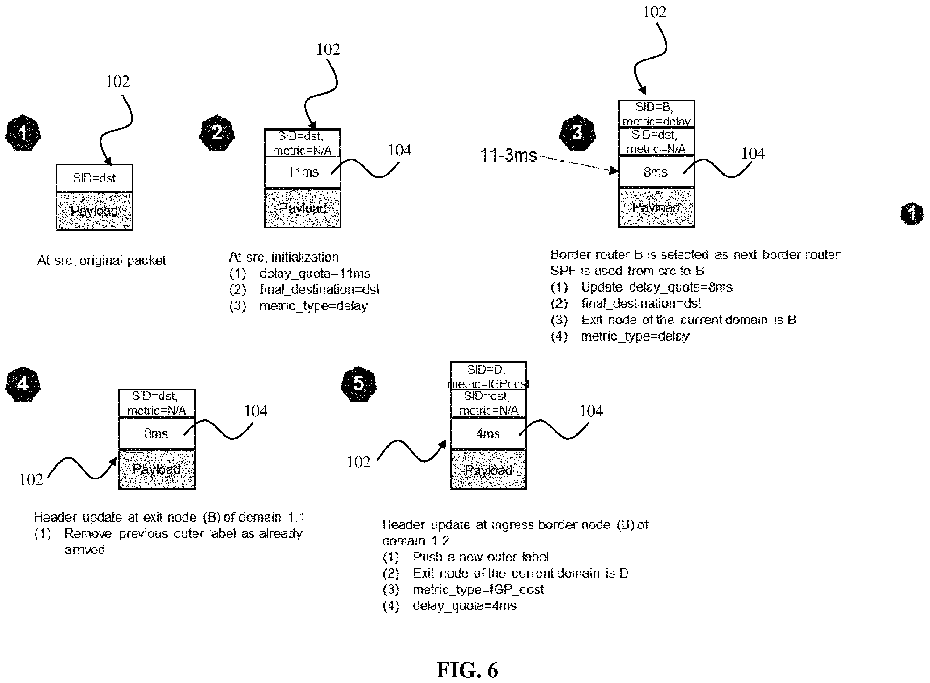

FIG. 5 and FIG. 6 illustrate, respectively, a multi-domain network in an implementation with segment routing, and a path selection and label stack actions in the multi-domain network. In particular, the two figures show how a packet 102 may be forwarded in an example topology with three domains (first domain 101, third domain 201, and fourth domain 202).

At an application layer of the source network node (here the first network node 100), the original packet 102 may be generated by specifying the destination network node 110 and a payload. The following steps may be carried out.
(1) The original packet 102 is obtained at the source network node 100.
(2) The source network node 100 converts the original packet format from conventional format to a multi-domain path format, i.e., it attaches a QoS type (also referred to as "metric type" in this disclosure; e.g. a "delay" in this example) to the segment routing SID (e.g., a SRv6 locator identifying a specific MTR topology) and adds an end-to delay quota or 11ms as the remaining QoS quota indicated by the QoS information 104 to the IP header of the packet 102.
(3) The source network node 100, which also acts as the ingress border network node of the first domain 101, finds the feasible current domain and the corresponding QoS type. That is, it may select a routing strategy for routing the one or more packets 102 in the first domain 101. Then, it may select a QoS quota type based on the selected routing strategy. As indicated in FIG. 4:
   A. The source network node 100 checks domain1.1 (first domain 101). The delay may be the QoS type in this example, i.e., the type of the QoS quota is a delay quota. The exit border network node of domain1.1 towards the destination network node is the network node B (i.e. selected network node 103s). In this case, the delay quota spent in domain1.1 is 3ms (src→A→B), and the minimum delay quota spent from network node B to the destination network node 110 is 4ms (B→J→K→dst). Since the end-to-end delay constraint can be satisfied as 3ms+4ms<11ms, the "delay" as the QoS quota type can be selected to construct a feasible path of domain1.1.
   B. The source network node 100 updates the packet header by, firstly, setting the domain1.1 as the current domain, and "delay" as the QoS quota type. Then, it creates a new segment routing label, of which the end SID is set as network node B (the selected exit border network node 103s of domain1.1), and the QoS quota type is set as "delay". Then, it pushes this new segment routing label to the packet header as the outer label 400 to guide the packet forwarding in the domain1.1. Secondly, the network node 100 updates the end-to-end delay quota indicated by the QoS information 104 at the header by 11ms-3ms=8ms. Also the selected routing strategy may be included into the header of each packet 102.
   C. Then, conventional SPF may be used to forward the packet 102 inside the domain1.1. The network nodes in the domain 1.1 forward the packet 102 via the shortest path from source network node 100 to network node B. During this path, the packet header will not be changed, because just conventional SPF based on IPv6 is assumed in the intermediate network nodes for compatibility.
(4) The selected network node B (i.e. selected second network node 103s), which also acts as the exit border network node of the domain1.1, realizes that it is the end SID of the outer label 400, and accordingly is configured to remove the outer label 400 from the label stack in the header of the received packet 102. Note that packet forwarding and processing in domain1.1 are finished at this stage.
(5) The network node B, which acts as the ingress border network node in the middle of the end-to-end path, may iteratively find the feasible current domain and the corresponding QoS quota type similar to step (3).
   A. In domain1.2 (second domain 201) the packet 102 can reach the exit border network node D by using IGP cost as the QoS quota type (i.e., the type of the QoS quota is "cost quota") while still satisfying the end-to-end delay constraint. As a result, the network node B is configured to update the packet header by, firstly, setting the end SID as network node D, and the QoS quotas type as "cost quota". Secondly, by updating the end-to-end delay quota at the header by 8ms-4ms=4ms (because the IGP shortest path is B→C→D with delay 3ms+1ms=4ms).
   B. Then, conventional SPF may again be used to forward the packet 102 inside the domain1.2 with a lowest cost routing strategy.

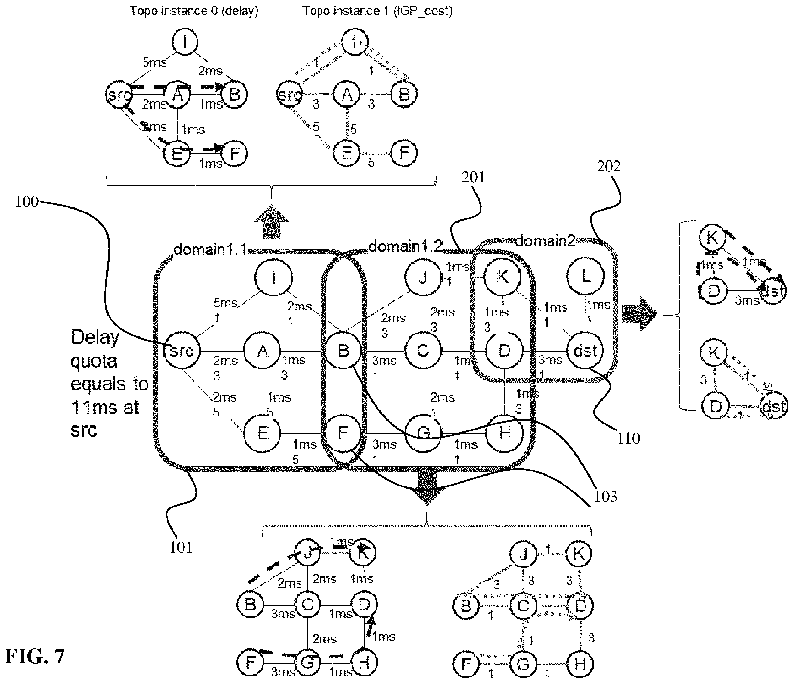

FIG. 7 shows an example of a delay quota advertisement across domains of the multi-domain network. In particular, a case with multiple topologies (e.g., MTR) in each area is described in the following.

In the example of FIG. 7, the border network nodes {B, F} are arranged between the domain1.1 (first domain 101) and the domain1.2 (second domain 201), and the border network nodes {K, D} are arranged between domain1.2 and domain2. The exit border network node of a domain may be selected in the anycast manner, i.e., the shortest path from the ingress network node to any one of the set of border network nodes may be used. FIG. 7 shows that two MTR topology may be available in each domain: one for the delay quota and one for the cost quota, each of them maintaining a shortest path tree.

In this example, an end-to-end delay constraint between the source network node (src) and the destination network node 110 (dst) of 11ms is considered. In domain1.1, the source network node (here the first network node 100) can reach the border network nodes B and F (second network nodes 103) in 3ms using the MTR delay topology, or it can reach the border network node B in 7ms using the MTR IGP cost topology.

In domain1.2, when a packet 102 is at the border network node B:
1. With remaining delay quota 11ms-3ms=8ms, it can choose:
   A. Delay topology to the border network node K in 3ms and thus the remaining delay quota to the destination network node 100 in 4ms (8-3-1 ms).
   B. (IGP) cost topology to the border network node D in 4ms, and thus the remaining delay quota to the destination network node 110 in 2ms (8-4-2 ms).
2. With remaining delay quota 11ms-7ms=4ms, it can choose:
   A. Delay topology to the border network node K in 3ms and thus the remaining delay quota to the destination network node 110 in 4ms

In domain 1.2, when a packet 102 is at the border network node F:
3. With remaining delay quota 11ms-3ms=8ms, it can choose:
A. Delay topology to the border network node D in 5ms, and thus the remaining delay quota to the destination network node 100 in 7ms.
B. (IGP) cost topology to the border network node D in 6ms and thus the remaining delay quota to the destination network node in 8ms.

In domain2, when a packet 102 is at the border network node K:
1. With remaining delay quota 11ms-3ms-3ms=5ms or 11ms-7ms-3ms=1ms, it can choose:
   A. Delay topology or (IGP) cost topology to the destination network node 110 in 1ms.

In domain 2, when a packet 102 is at the border network node D:
1. With remaining delay quota 11ms-3ms-4ms=4ms, it can choose:
   A. Delay topology to the destination network node 110 in 2ms.
   B. (IGP) cost topology to the destination network node 110 in 3ms.
2. With remaining delay quota 11ms-3ms-5ms=3ms or 11ms-3ms-6ms=2ms, it can choose:
   A. Delay topology to the destination network node 110 in 2ms.

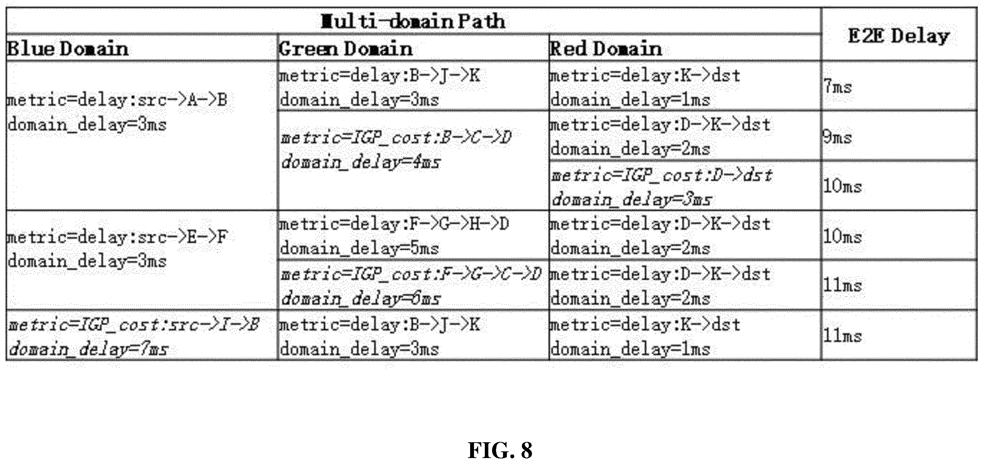

FIG. 8 illustrates a path and a delay quota for multi-topology scenarios. In particular, the table in FIG. 8 shows that with using MTR topologies in each domain, the number of possible paths from the source network node 100 to the destination network node 110 is 6. Without MTR, the total number of paths would have been 3, if there is a single topology on the delay in all domains.

To implement this in an example, one or more or all border network nodes of a domain may advertise the distance to the destination network node 110 related to the delay even for topologies (shortest path trees) which are not using the delay QoS quota (i.e., using in the example the cost QoS quota). As a consequence, when the distance to the destination network node 110 is advertised using Type 3 LSAs in OSPF, for instance, several distances may be advertised for all paths towards the destination network node 110. In particular, the distance for the QoS quota type that are being used in the remaining QoS quota in the header of the packet 102.

The management of multiple QoS quota at e.g. the border network nodes may use a new protocol extension in case several routing strategies are available in each domain. For each routing strategy (e.g., each MTR topology), border network nodes may advertise the distance or expected QoS quota usage for all the QoS quota types that are used in the remaining QoS quota in the header, i.e., all the QoS quota that are involved into the end-to-end QoS routing constraints. That is, border network nodes, like the second network nodes 103, may provide an advertisement indicating multiple sub-sets of required QoS quotas that are required for a packet 102 to be routed from the first network node 100 to the destination network node 110. Each sub-set of required QoS quotas may comprise QoS quotas of a different type. Each of the required QoS quotas relates to a different routing path to the destination network node 110.

In case the end-to-end QoS constraint relates to the delay quota, the delay quota information may be advertised by the border network nodes for each routing strategy they propose, even if these paths are not minimizing the delay. For example, if the path offered by an outgoing border network node minimizes the cost quota, the ingress border network node that is upstream on the path of the packet 102 towards the destination network node 110 can know how much delay quota will be consumed over this path.

Border network nodes may use a Revised Type 3 LSA to advertise distances for all QoS quota (associated with the quota header) for all topologies. For each topology, border network nodes may advertise (1) the minimum distance for the QoS quota related to the topology and (2) the utilization of QoS quota related to the remaining QoS quota in the header of the packet 102.

There can be two types of new Type 3 LSA broadcast by the border network nodes of a domain: node-level and domain-level LSA.

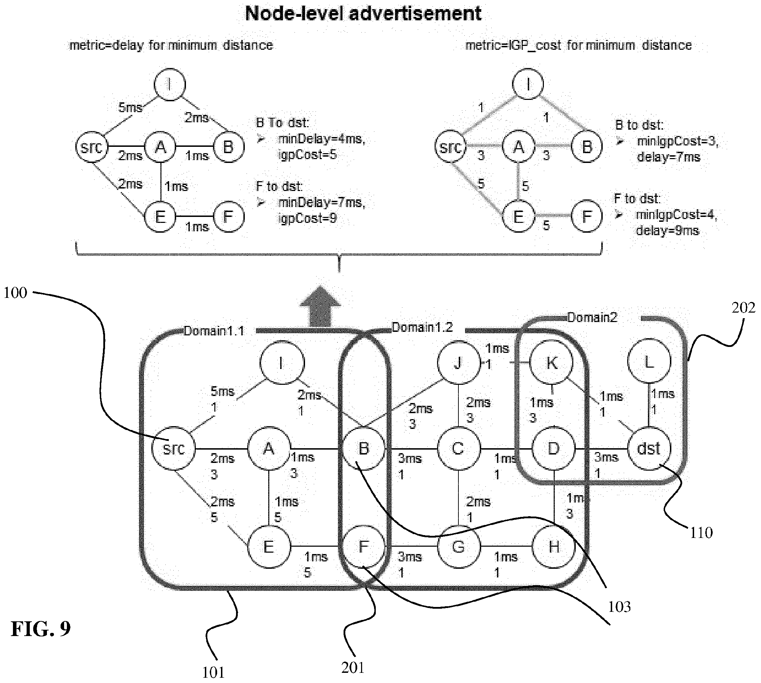

FIG. 9 shows an example of node-level advertisement. Node-level LSA means that the LSA carries the minimum distance of a specified QoS quota to a particular destination network node 100. It may be similar to the existing Type 3 LSA of OSPF protocol, except that the distances of other QoS quota related to the minimum distance of the specified QoS quota may be carried and updated at the border network nodes.

The following is an example of LSA advertisement to the destination network node 100 (dst):
- For the border network node B between domain1.1 (first domain 101) and domain1.2 (second domain 201):
   A. When "delay" is specified as the QoS quota for a minimum distance calculation, the minimum distance, minDelay, from network node B to the destination network node 110 is 4ms (2ms+1ms+1ms, by passing the path B→J→K→dst), and thus the related IGP cost is 5 (3+1+1).
   B. When IGP "cost" is specified as the QoS quota for a minimum distance calculation, the minimum cost, minIgpCost, from network node B to the destination network node 110 is 3 (1+1+1, by passing the path B→C→D→dst), and thus the related delay distance is 7ms (3ms+1ms+3ms).
- For the border network node F between domain1.1 and domain1.2:
   A. When "delay" is specified as the QoS quota for minimum distance calculation, the minimum distance, minDelay, from F to destination network node 110 is 7ms (3ms+1ms+1ms+1ms+1ms, by passing the path F→G→H→D→K→dst), and thus the related IGP cost is 9 (1+1+3+3+1).
   B. When IGP "cost" is specified as the QoS quota for minimum distance calculation, the minimum cost, minIgpCost, from F to destination network node 110 is 4 (1+1+1+1, by passing the path F→G→C→D→dst), and thus the related delay distance is 9ms (3ms+2ms+1ms+3ms).

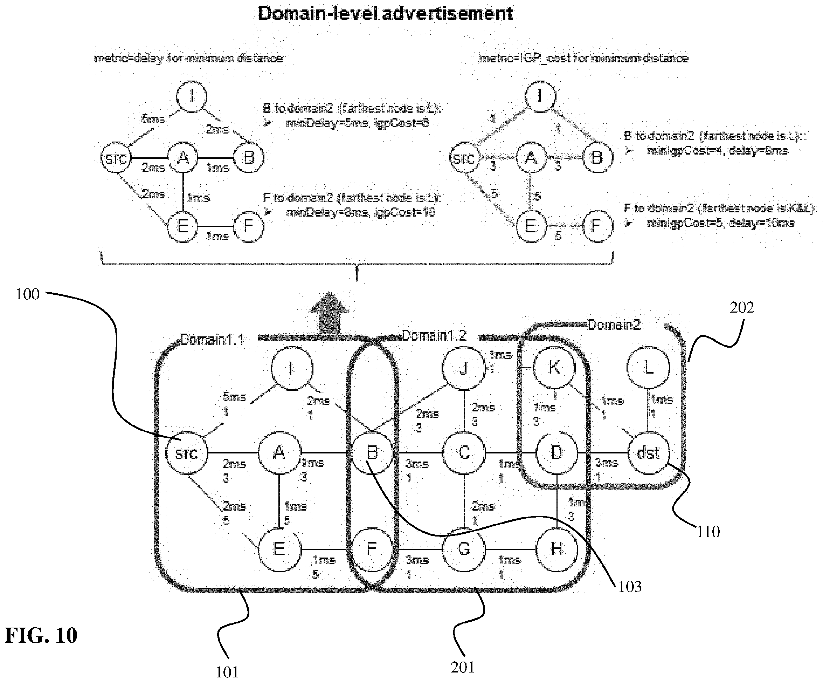

FIG. 10 shows an example of domain-level advertisement. Domain-level LSA means that the LSA carries the minimum distance of a specified QoS quota that is required to all network nodes of a particular destination domain. Distances of other QoS quota may be carried and updated according to the longest SPF to nodes inside the particular destination domain.

The following is an example of LSA advertisement to domain2:
- For the border node B between domain1.1 (first domain 101) and domain1.2 (second domain 201):
   A. When "delay" is specified as the QoS quota for minimum distance calculation, the distance from network node B to network nodes of domain2 is {3ms (K), 4ms (D, dst), 5ms (L)}. Therefore, the minimum required delay to {K, D, L, dst} is argmin *delay* ≥ max(3,4,5) = 5 , where 5ms is achieved for L (2ms+1ms+1ms+1ms, by passing the path B→J→K→dst→L). Thus, the related IGP cost is 6 (3+1+1+1). That means, the revised type 3 LSA information contains (minDelay=5ms, igpCost=6).
   B. When IGP "cost" is specified as the QoS quota for minimum distance calculation, the distance from network node B to the network nodes of domain2 is {2 (D), 3 (dst), 4 (K, L)}. Therefore, the minimum required IGP cost to {K, D, L, dst} is 4 for K/L (1+1+1+1, by passing the path B→C→D→dst→K/L), and thus the related delay distance is 8ms (3ms+1ms+3ms+1ms). That means, the revised type 3 LSA information contains (minIgpCost=4, delay=8ms).
- For the border node F between domain1.1 and domain1.2:
   A. When "delay" is specified as the QoS quota for minimum distance calculation, the distance from network node F to network nodes of domain2 is {5ms (D), 6ms (K), 7ms (dst), 8ms (L)}. Therefore, the minimum required delay to {K, D, L, dst} is 8ms, which is achieved for L (3ms+1ms+1ms+1ms+1ms+1ms, by passing the path F→G→H→D→K→dst→L), and thus the related IGP cost is 10 (1+1+3+3+1+1+1). That means, the revised type 3 LSA information contains (minDelay=8ms, igpCost=10).
   B. When IGP "cost" is specified as the QoS quota for minimum distance calculation, the distance from network F to network nodes of domain2 is {3 (D), 4 (dst), 5 (K, L)}. Therefore, the minimum required IGP cost to {K, D, L, dst} is 5 for K/L (1+1+1+1+1, by passing the path F→G→C→D→dst→K/L), and thus the related delay distance is 10ms (3ms+2ms+1ms+3ms+1ms). That means, the revised type 3 LSA information contains (minIgpCost=5, delay=10ms).

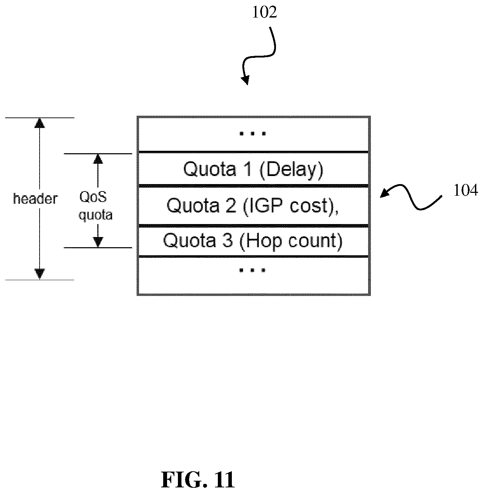

FIG. 11 shows an example of a remaining QoS quota header of an exemplary packet 102. The content of the remaining QoS quota (e.g. an option in the header) can be encoded in different manners depending on the deployment scenario. It can contain information about at least one of the delay (e.g., upper bounded propagation delay), the jitter (e.g., deterministic or bounded queueing delay), the (IGP) cost, and the hop count, etc. Multiple QoS information elements can be encoded in the same header in case the paths for a flow must satisfy multiple end-to-end QoS constraints.

The remaining QoS quota may be first updated at the source network node of the packet 102 or at an ingress network node. The end-to-end QoS constraint may be used to initialize the QoS quota of the header of the packet 102. Then, at each border network node, the remaining QoS quota may updated, in particular, by subtracting the expected use of the QoS quota in the current domain. This update may be done at the ingress network node instead of the egress network node, as the border network nodes may not able to reconstruct the incoming path. The hop-by-hop nature of the packet forwarding may forget past routing decisions.

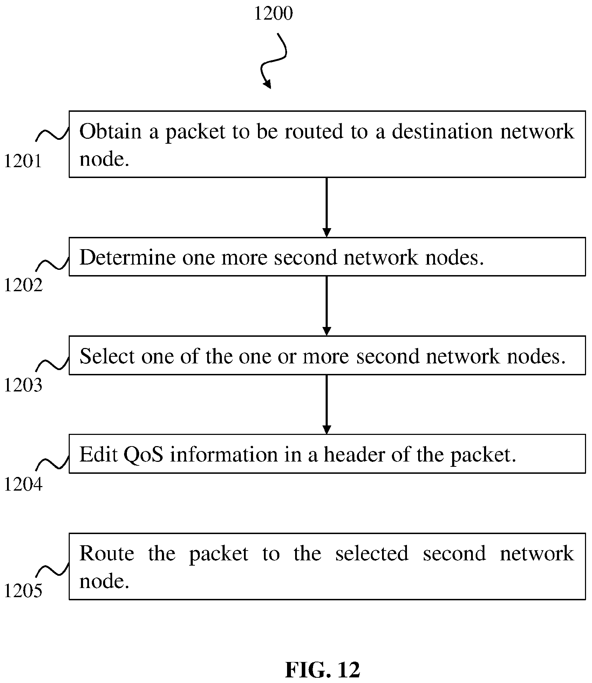

FIG. 12 shows a method 1200 according to an embodiment of this disclosure. The method 1200 is configured to support distributed load-balancing in a multi-domain network. The method 1200 may be performed by a first network node 100 arranged in a first domain 101 of the multi-domain network, which may be a border network node of the first domain 101.

The method comprises a step 1201 of obtaining one or more packets 102 to be routed to a destination network node 110 arranged in the multi-domain network outside of the first domain 101.

The method 1200 further comprises, for a packet 102 of the one or more packets 102, determining one more second network nodes 103 based on an available QoS quota and one or more required QoS quotas, wherein each of the required QoS quotas is required to route the packet 102 from the first network node 100 to one of the second network nodes 103. Further, a step 1202 of selecting one of the one or more second network nodes 103. Then, a step 1203 of editing QoS information in a header of the packet 102 based on the available QoS quota and the required QoS quota that is required to route the packet 102 from the first network node 100 to the selected second network node 103. In particular, so that the QoS information 104 indicates a first remaining QoS quota that remains when the packet 102 has reached the selected second network node 103. The method 1200 also comprises a step 1204 of routing the packet 102 towards the selected second network node 103.

The present disclosure has been described in conjunction with various embodiments as examples as well as implementations. However, other variations can be understood and effected by those persons skilled in the art and practicing the claimed matter, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A first network node (100) for distributed load-balancing and arrangement in a first domain (101) of a multi-domain network, wherein the first network node (100) is configured to:
obtain one or more packets (102) to be routed to a destination network node (110) arranged in the multi-domain network outside the first domain (101); and
wherein the first network node (100) is further configured to, for a packet (102) of the one or more packets (102):
determine one or more second network nodes (103) based on an available QoS quota and one or more required QoS quotas, wherein each of the required QoS quotas is required to route the packet (102) from the first network node (100) to one of the second network nodes (103);
select one of the one (103s) or more second network nodes (103);
edit QoS information (104) in a header of the packet (102) based on the available QoS quota and the required QoS quota that is required to route the packet (102) from the first network node (100) to the selected second network node (103s), so that the QoS information (104) indicates a first remaining QoS quota that remains when the packet (102) has reached the selected second network node (103s); and
route the packet (102) towards the selected second network node (103s).

2. The first network node (100) according to claim 1, configured to:
obtain a plurality of packets (102) to be routed to the destination network node (110), wherein the plurality of packets (102) belongs to at least a first flow and a second flow;
select at least two second network nodes (103s) for the plurality of packets (102); and
route the packets (102) of the first flow to one of the at least two second network nodes (103s) and route the packets (102) of the second flow to another one of the at least two second network nodes (103s).

3. The first network node (100) according to claim 2, configured to:
load-balance at least the first flow and the second flow by selecting the at least two second network nodes (103s) and routing the packets (102) of the flows towards the at least two selected second network nodes (103s), respectively.

4. The first network node (100) according to one of the claims 1 to 3, wherein a type of each QoS quota comprises at least one of the following:
- a delay quota;
- a jitter quota;
- a cost quota;
- a hop-count quota.

5. The first network node (100) according to one of the claims 1 to 4, further configured to:
select a routing strategy for routing the one or more packets (102) in the first domain (101);
wherein a type of each QoS quota depends on the selected routing strategy.

6. The first network node (100) according to claim 5, wherein the routing strategy comprises one of:
- shortest delay;
- lowest hop-count;
- lowest cost;
- smallest jitter.

7. The first network node (100) according to one of the claims 1 to 6, wherein the first network node (100) is a source node for the one or more packets (102), and is configured to:
prepare the one or more packets (102);
wherein the first network node (100) is further configured to, for each packet (102):
determine the available QoS quota according to an end-to-end QoS constraint for routing the one or more packets (102) to the destination network node (110); and
edit the QoS information (104) in the header of the packet (102) by adding it into the header, so that it indicates the first remaining QoS quota that remains when the packet (102) has reached the selected second network node (103s).

8. The first network node (100) according to one of the claims 1 to 6, wherein the first network node (100) is configured to:
receive the one or more packets (102) from one or more network nodes (112) arranged in a second domain (111) of the multi-domain network, wherein the header of each received packet (102) includes QoS information (104) indicating a second remaining QoS quota that remains after the packet (102) has reached the first network node (100);
wherein the first network node (100) is further configured to, for each packet (102):
determine the available QoS quota according to the second remaining QoS quota of the packet; and
edit the QoS information (104) in the header of the packet (102) by modifying it so that it indicates the first remaining QoS quota that remains when the packet (102) has reached the selected second network node (103s).

9. The first network node (100) according to one of the claims 1 to 8, further configured to:
receive a first advertisement from one or more network nodes configured to interact with a third domain (201) of the multi-domain network, wherein the first advertisement indicates a set of required QoS quotas that are required for a packet (102) to be routed from respectively the one or more network nodes to the destination network node (110), wherein each of the required QoS quotas relates to a different routing path to the destination network node (110); and
select the one or more second network nodes (103), from the one or more network nodes, configured to interact with the third domain (201), based further on the first advertisement.

10. The first network node (100) according to one of the claims 1 to 9 wherein:
the first network node (100) is arranged at a border between the first domain (101) and the second domain (111); and/or
the one or more second network nodes (103) are arranged at a border between the first domain (101) and the third domain (201).

11. The first network node (100) according to one of the claims 1 to 10, further configured to:
provide a second advertisement indicating a set of required QoS quotas that are required for a packet (102) to be routed from the first network node (100) to the destination network node (110), wherein each of the required QoS quotas relates to a different routing path to the destination network node (110).

12. The first network node (100) according to one of the claims 1 to 11, further configured to include at least one of the following into a first outer label (400) of a label stack in the header of each packet (102):
- the QoS information (104);
- an identifier of the selected second network node (103s);
- a routing strategy for routing the one or more packets (102) in the first domain (101).

13. The first network node (100) according to one of the claims 1 to 12 when depending on claim 8, further configured to:
determine the available QoS quota for each received packet according to QoS information (104) in a second outer label (400) of a label stack in the header of the received packet (102); and
remove the second outer label (400) from the label stack in the header of the received packet (102).

14. A method (1200) for distributed load-balancing in a multi-domain network, wherein the method (1200) is performed by a first network node (100) arranged in a first domain (101) of the multi-domain network, and comprises:
obtaining (1201) one or more packets (102) to be routed to a destination network node (110) arranged in the multi-domain network outside of the first domain (101); and
wherein the method (1200) further comprises, for a packet (102) of the one or more packets (102):
determining (1202) one more second network nodes (103) based on an available QoS quota and one or more required QoS quotas, wherein each of the required QoS quotas is required to route the packet (102) from the first network node (100) to one of the second network nodes (103);
selecting (1203) one of the one or more second network nodes (103);
editing (1204) QoS information (104) in a header of the packet (102) based on the available QoS quota and the required QoS quota that is required to route the packet (102) from the first network node (100) to the selected second network node (103s), so that the QoS information (104) indicates a first remaining QoS quota that remains when the packet (102) has reached the selected second network node (103s); and
routing (1205) the packet (102) towards the selected second network node (103s.).

15. A computer program comprising a program code which, when executed by a processor of a network node (100), causes the network node (100) to perform the method (1200) according to claim 14.

## Patentansprüche

1. Erster Netzwerkknoten (100) für verteilte Lastverteilung und -anordnung in einer ersten Domäne (101) eines Mehrdomänennetzwerks, wobei der erste Netzwerkknoten (100) konfiguriert ist zum:
Erlangen eines oder mehrerer Pakete (102), die zu einem Ziel-Netzwerkknoten (110) geleitet werden sollen, der in dem Mehrdomänennetzwerk außerhalb der ersten Domäne (101) angeordnet ist; und
wobei der erste Netzwerkknoten (100) für ein Paket (102) des einen oder der mehreren Pakete (102) ferner konfiguriert ist zum:
Bestimmen eines oder mehrerer zweiter Netzwerkknoten (103) basierend auf einer verfügbaren QoS-Quote und einer oder mehrerer erforderlichen QoS-Quoten, wobei jede der erforderlichen QoS-Quoten erforderlich ist, um das Paket (102) von dem ersten Netzwerkknoten (100) zu einem der zweiten Netzwerkknoten (103) zu leiten;
Auswählen eines des einen (103s) oder der mehreren zweiten Netzwerkknoten (103);
Bearbeiten von QoS-Informationen (104) in einem Kopf des Pakets (102) basierend auf der verfügbaren QoS-Quote und der erforderlichen QoS-Quote, die erforderlich ist, um das Paket (102) von dem ersten Netzwerkknoten (100) zu dem ausgewählten zweiten Netzwerkknoten (103s) zu leiten, so dass die QoS-Informationen (104) eine erste verbleibende QoS-Quote angeben, die verbleibt, wenn das Paket (102) den ausgewählten zweiten Netzwerkknoten (103s) erreicht hat; und
Leiten des Pakets (102) hin zu dem ausgewählten zweiten Netzwerkknoten (103s).

2. Erster Netzwerkknoten (100) nach Anspruch 1, konfiguriert zum:
Erlangen einer Vielzahl von Paketen (102), die zu dem Ziel-Netzwerkknoten (110) geleitet werden sollen, wobei die Vielzahl von Paketen (102) zu mindestens einem ersten Fluss und einem zweiten Fluss gehört;
Auswählen von mindestens zwei zweiten Netzwerkknoten (103s) für die Vielzahl von Paketen (102); und
Leiten der Pakete (102) des ersten Flusses zu einem der mindestens zwei zweiten Netzwerkknoten (103s) und Leiten der Pakete (102) des zweiten Flusses zu einem anderen einen der mindestens zwei zweiten Netzwerkknoten (103s).

3. Erster Netzwerkknoten (100) nach Anspruch 2, konfiguriert zur:
Lastverteilung mindestens des ersten Flusses und des zweiten Flusses durch Auswählen der mindestens zwei zweiten Netzwerkknoten (103s) und Leiten der Pakete (102) der Flüsse hin zu den jeweiligen mindestens zwei ausgewählten zweiten Netzwerkknoten (103s).

4. Erster Netzwerkknoten (100) nach einem der Ansprüche 1 bis 3, wobei ein Typ jeder QoS-Quote mindestens eines des Folgenden umfasst:
- eine Verzögerungsquote;
- eine Jitterquote;
- eine Kostenquote,
- eine Sprunganzahlquote.

5. Erster Netzwerkknoten (100) nach einem der Ansprüche 1 bis 4, ferner konfiguriert zum:
Auswählen einer Leitstrategie zum Leiten des eines oder der mehreren Pakete (102) in der ersten Domäne (101);
wobei ein Typ jeder QoS-Quote von der ausgewählten Leitstrategie abhängig ist.

6. Erster Netzwerkknoten (100) nach Anspruch 5, wobei die Leitstrategie eines von Folgendem umfasst:
- kürzeste Verzögerung;
- niedrigste Sprunganzahl;
- niedrigste Kosten;
- kleinster Jitter.

7. Erster Netzwerkknoten (100) nach einem der Ansprüche 1 bis 6, wobei der erste Netzwerkknoten (100) ein Ausgangsknoten für das eine oder die mehreren Pakete (102) ist und konfiguriert ist zum:
Erstellen des einen oder der mehreren Pakete (102);
wobei der erste Netzwerkknoten (100) für jedes Paket (102) ferner konfiguriert ist zum:
Bestimmen der verfügbaren QoS-Quote gemäß einer Ende-zu-Ende-QoS-Beschränkung zum Leiten des einen oder der mehreren Pakete (102) zu dem Ziel-Netzwerkknoten (110); und
Bearbeiten der QoS-Informationen (104) in dem Kopf des Pakets (102) durch Hinzufügen dieser in den Kopf, so dass sie die erste verbleibende QoS-Quote angeben, die verbleibt, wenn das Paket (102) den ausgewählten zweiten Netzwerkknoten (103s) erreicht hat.

8. Erster Netzwerkknoten (100) nach einem der Ansprüche 1 bis 6, wobei der erste Netzwerkknoten (100) konfiguriert ist zum:
Empfangen des einen oder der mehreren Pakete (102) von einem oder mehreren Netzwerkknoten (112), die in einer zweiten Domäne (111) des Mehrdomänennetzwerks angeordnet sind, wobei der Kopf jedes empfangenen Pakets (102) QoS-Informationen (104) enthält, die eine zweite verbleibende QoS-Quote angeben, die verbleibt, nachdem das Paket (102) den ersten Netzwerkknoten (100) erreicht hat;
wobei der erste Netzwerkknoten (100) für jedes Paket (102) ferner konfiguriert ist zum:
Bestimmen der verfügbaren QoS-Quote gemäß der zweiten verbleibenden QoS-Quote des Pakets; und
Bearbeiten der QoS-Informationen (104) in dem Kopf des Pakets (102) durch Modifizieren dieser, so dass sie die erste verbleibende QoS-Quote angeben, die verbleibt, wenn das Paket (102) den ausgewählten zweiten Netzwerkknoten (103s) erreicht hat.

9. Erster Netzwerkknoten (100) nach einem der Ansprüche 1 bis 8, ferner konfiguriert zum:
Empfangen einer ersten Ankündigung von einem oder mehreren Netzwerkknoten, die konfiguriert sind zum Interagieren mit einer dritten Domäne (201) des Mehrdomänennetzwerks, wobei die erste Ankündigung eine Menge von erforderlichen QoS-Quoten angibt, die für ein Paket (102) erforderlich sind, das jeweils von dem einem oder den mehreren Netzwerkknoten zu dem Ziel-Netzwerkknoten (110) geleitet werden soll, wobei sich jede der erforderlichen QoS-Quoten auf einen verschiedenen Leitweg zu dem Ziel-Netzwerkknoten (110) bezieht; und
Auswählen des einen oder der mehreren zweiten Netzwerkknoten (103) aus dem einen oder den mehreren Netzwerkknoten, die konfiguriert sind zum Interagieren mit der dritten Domäne (201), basierend ferner auf der ersten Ankündigung.

10. Erster Netzwerkknoten (100) nach einem der Ansprüche 1 bis 9, wobei:
der erste Netzwerkknoten (100) an einer Grenze zwischen der ersten Domäne (101) und der zweiten Domäne (111) angeordnet ist; und/oder
der eine oder die mehreren zweiten Netzwerkknoten (103) an einer Grenze zwischen der ersten Domäne (101) und der dritten Domäne (201) angeordnet sind.

11. Erster Netzwerkknoten (100) nach einem der Ansprüche 1 bis 10, ferner konfiguriert zum:
Bereitstellen einer zweiten Ankündigung, die eine Menge von erforderlichen QoS-Quoten angibt, die für ein Paket (102) erforderlich sind, das von dem ersten Netzwerkknoten (100) zu dem Ziel-Netzwerkknoten (110) geleitet werden soll, wobei sich jede der erforderlichen QoS-Quoten auf einen verschiedenen Leitweg zu dem Ziel-Netzwerkknoten (110) bezieht.

12. Erster Netzwerkknoten (100) nach einem der Ansprüche 1 bis 11, ferner konfiguriert zum Einfügen mindestens eines des Folgenden in ein erstes äußeres Etikett (400) eines Etikettenstapels in dem Kopf jedes Pakets (102):
- die QoS-Informationen (104);
- eine Kennung des ausgewählten zweiten Netzwerkknotens (103s);
- eine Leitstrategie zum Leiten des einen oder der mehreren Pakete (102) in der ersten Domäne (101).

13. Erster Netzwerkknoten (100) nach einem der Ansprüche 1 bis 12 bei Abhängigkeit von Anspruch 8, ferner konfiguriert zum:
Bestimmen der verfügbaren QoS-Quote für jedes empfangene Paket gemäß QoS-Informationen (104) in einem zweiten äußeres Etikett (400) eines Etikettenstapels in dem Kopf des empfangenen Pakets (102); und
Entfernen des zweiten äußeren Etiketts (400) aus dem Etikettenstapel in dem Kopf des empfangenen Pakets (102).

14. Verfahren (1200) für verteilte Lastverteilung in einem Mehrdomänennetzwerk, wobei das Verfahren (1200) durch einen ersten Netzwerkknoten (100), der in einer ersten Domäne (101) des Mehrdomänennetzwerks angeordnet ist, durchgeführt wird und umfasst:
Erlangen (1201) eines oder mehrerer Pakete (102), die zu einem Ziel-Netzwerkknoten (110) geleitet werden sollen, der in dem Mehrdomänennetzwerk außerhalb der ersten Domäne (101) angeordnet ist; und
wobei das Verfahren (1200) für ein Paket (102) des einen oder der mehreren Pakete (102) ferner umfasst:
Bestimmen (1202) eines weiteren zweiten Netzwerkknotens (103) basierend auf einer verfügbaren QoS-Quote und einer oder mehreren erforderlichen QoS-Quoten, wobei jede der erforderlichen QoS-Quoten erforderlich ist, um das Paket (102) von dem ersten Netzwerkknoten (100) zu einem der zweiten Netzwerkknoten (103) zu leiten,
Auswählen (1203) eines des einen oder der mehreren zweiten Netzwerkknoten (103);
Bearbeiten (1204) von QoS-Informationen (104) in einem Kopf des Pakets (102) basierend auf der verfügbaren QoS-Quote und der erforderlichen QoS-Quote, die erforderlich ist, um das Paket (102) von dem ersten Netzwerkknoten (100) zu dem ausgewählten zweiten Netzwerkknoten (103s) zu leiten, so dass die QoS-Informationen (104) eine erste verbleibende QoS-Quote angeben, die verbleibt, wenn das Paket (102) den ausgewählten zweiten Netzwerkknoten (103s) erreicht hat; und Leiten (1205) des Pakets (102) hin zu dem ausgewählten zweiten Netzwerkknoten (103s).

15. Computerprogramm, umfassend einen Programmcode, der, wenn er durch einen Prozessor eines Netzwerkknotens (100) ausgeführt wird, den Netzwerkknoten (100) veranlasst, das Verfahren (1200) nach Anspruch 14 durchzuführen.

## Revendications

1. Premier nœud de réseau (100), pour un équilibrage de charge distribué et pour l'agencement dans un premier domaine (101) d'un réseau multidomaine, ce premier nœud de réseau (100) étant configuré de façon à :
obtenir un ou plusieurs paquets (102) à acheminer jusqu'à un nœud de réseau de destination (110) agencé dans le réseau multidomaine à l'extérieur du premier domaine (101) ; et
ce premier nœud de réseau (100) étant configuré en outre de façon à, pour un paquet (102) parmi le ou les paquets (102) :
déterminer un ou plusieurs deuxièmes nœuds de réseau (103) en se basant sur un quota de qualité de service, QoS, disponible ou sur un ou plusieurs quotas QoS requis, chacun de ces quotas QoS requis étant requis pour acheminer le paquet (102) du premier nœud de réseau (100) jusqu'à un des deuxièmes nœuds de réseau (103) ;
sélectionner un nœud de réseau parmi les un ou plusieurs deuxièmes nœuds de réseau (103) ;
éditer les informations QoS (104) dans un en-tête du paquet (102) en se basant sur le quota QoS disponible et sur le quota QoS requis qui est requis pour acheminer le paquet (102) du premier nœud de réseau (100) jusqu'au deuxième nœud de réseau sélectionné (103s), de façon que les informations QoS (104) indiquent un premier quota QoS restant qui reste lorsque le paquet (102) a atteint le deuxième nœud de réseau sélectionné (103s); et
acheminer le paquet (102) vers les deuxièmes nœuds de réseau sélectionnés (103s).

2. Premier nœud de réseau (100) selon la revendication 1, configuré de façon à :
obtenir une pluralité de paquets (102) à acheminer jusqu'au nœud de réseau de destination (110), cette pluralité de paquets (102) appartenant à au moins un premier flux et un deuxième flux ;
sélectionner au moins deux deuxièmes nœuds de réseau (103s) pour la pluralité de paquets (102) ; et
acheminer les paquets (102) du premier flux jusqu'à un nœud de réseau des au moins deux deuxièmes nœuds de réseau (103s) et acheminer les paquets (102) du deuxième flux jusqu'à un autre nœud de réseau des au moins deux deuxièmes nœuds de réseau (103s).

3. Premier nœud de réseau (100) selon la revendication 2, configuré de façon à :
équilibrer la charge pour au moins le premier flux et le deuxième flux en sélectionnant les au moins deux deuxièmes nœuds de réseau (103s) et en acheminant les paquets (102) des flux vers les au moins deux deuxièmes nœuds de réseau sélectionnés (103s), respectivement.

4. Premier nœud de réseau (100) selon l'une quelconque des revendications 1 à 3, dans lequel un type de chaque quota QoS comprend au moins un des quotas suivants :
- un quota de retard ;
- un quota de gigue ;
- un quota de coût ;
- un quota de nombre de sauts.

5. Premier nœud de réseau (100) selon l'une quelconque des revendications 1 à 4, configuré en outre de façon à :
sélectionner une stratégie d'acheminement pour acheminer le ou les paquets (102) dans le premier domaine (101) ;
un type de chaque quota QoS dépendant de la stratégie d'acheminement sélectionnée.

6. Premier nœud de réseau (100) selon la revendication 5, dans lequel la stratégie d'acheminement comprend :
- soit le retard le plus court ;
- soit le nombre de sauts le plus bas ;
- soit le coût le plus bas ;
- soit la gigue la plus petite.

7. Premier nœud de réseau (100) selon l'une quelconque des revendications 1 à 6, ce premier nœud de réseau (100) étant un nœud source pour le ou les paquets (102), et étant configuré de façon à :
préparer le ou les paquets (102) ;
le premier nœud de réseau (100) étant configuré en outre de façon à, pour chaque paquet (102) :
déterminer le quota QoS disponible conformément à une contrainte QoS de bout en bout pour acheminer le ou les paquets (102) jusqu'au nœud de réseau de destination (110) ; et
éditer les informations QoS (104) dans l'en-tête du paquet (102) en les ajoutant dans l'en-tête, de façon qu'elles indiquent le premier quota QoS restant qui reste lorsque le paquet (102) a atteint le deuxième nœud de réseau sélectionné (103s).

8. Premier nœud de réseau (100) selon l'une quelconque des revendications 1 à 6, ce premier nœud de réseau (100) étant configuré de façon à :
recevoir le ou les paquets (102) venant d'un ou de plusieurs nœuds de réseau (112) agencés dans un deuxième domaine (111) du réseau multidomaine, l'en-tête de chaque paquet reçu (102) comprenant des informations QoS (104) indiquant un deuxième quota QoS restant qui reste après que le paquet (102) a atteint le premier nœud de réseau (100) ;
le premier nœud de réseau (100) étant configuré en outre de façon à, pour chaque paquet (102) :
déterminer le quota QoS disponible conformément au deuxième quota QoS restant du paquet ; et
éditer les informations QoS (104) dans l'en-tête du paquet (102) en les modifiant de façon qu'elles indiquent le premier quota QoS restant qui reste lorsque le paquet (102) a atteint le deuxième nœud de réseau sélectionné (103s).

9. Premier nœud de réseau (100) selon l'une quelconque des revendications 1 à 8, configuré en outre de façon à :
recevoir une première annonce venant d'un ou de plusieurs nœuds de réseau configurés de façon à interagir avec un troisième domaine (201) du réseau multidomaine, cette première annonce indiquant un ensemble de quotas QoS requis qui sont requis pour qu'un paquet (102) soit acheminé depuis le ou les nœuds de réseau respectivement jusqu'au nœud de réseau de destination (110), chacun des quotas QoS requis se rapportant à un chemin d'acheminement différent jusqu'au nœud de réseau de destination (110) ; et
sélectionner le ou les deuxièmes nœuds de réseau (103), parmi le ou les nœuds de réseau, configurés de façon à interagir avec le troisième domaine (201), en se basant en outre sur la première annonce.

10. Premier nœud de réseau (100) selon l'une quelconque des revendications 1 à 9,
ce premier nœud de réseau (100) étant agencé à une limite entre le premier domaine (101) et le deuxième domaine (111) ; et/ou
le ou les deuxièmes nœuds de réseau (103) étant agencés à une limite entre le premier domaine (101) et le troisième domaine (201).

11. Premier nœud de réseau (100) selon l'une quelconque des revendications 1 à 10, configuré en outre de façon à :
fournir une deuxième annonce indiquant un ensemble de quotas QoS requis qui sont requis pour qu'un paquet (102) soit acheminé du premier nœud de réseau (100) jusqu'au nœud de réseau de destination (110), chacun des quotas QoS requis se rapportant à un chemin d'acheminement différent jusqu'au nœud de réseau de destination (110).

12. Premier nœud de réseau (100) selon l'une quelconque des revendications 1 à 11, configuré en outre de façon à inclure au moins une des informations suivantes dans une première étiquette extérieure (400) d'une pile d'étiquettes dans l'en-tête de chaque paquet (102) :
- les informations QoS (104) ;
- un identifiant du deuxième nœud de réseau sélectionné (103s) :
- une stratégie d'acheminement pour acheminer le ou les paquets (102) dans le premier domaine (101).

13. Premier nœud de réseau (100) selon l'une quelconque des revendications 1 à 12 lorsqu'elle dépend de la revendication 8, configuré en outre de façon à :
déterminer le quota QoS disponible pour chaque paquet reçu conformément aux informations QoS (104) dans une deuxième étiquette extérieure (400) d'une pile d'étiquettes dans l'en-tête du paquet reçu (102) ; et
enlever la deuxième étiquette extérieure (400) de la pile d'étiquettes dans l'en-tête du paquet reçu (102).

14. Procédé (1200) pour un équilibrage de charge distribué dans un réseau multidomaine, ce procédé (1200) étant exécuté par un premier nœud de réseau (100) agencé dans un premier domaine (101) du réseau multidomaine, et comprenant :
l'obtention (1201) d'un ou de plusieurs paquets (102) à acheminer jusqu'à un nœud de réseau de destination (110) agencé dans le réseau multidomaine à l'extérieur du premier domaine (101) ; et
ce procédé (1200) comprenant en outre, pour un paquet (102) parmi le ou les paquets (102) :
la détermination (1202) d'un ou de plusieurs deuxièmes nœuds de réseau (103) en se basant sur un quota QoS disponible ou sur un ou plusieurs quotas QoS requis, chacun de ces quotas QoS requis étant requis pour acheminer le paquet (102) du premier nœud de réseau (100) à un des deuxièmes nœuds de réseau (103) ;
la sélection (1203) d'un nœud de réseau parmi le ou les deuxièmes nœuds de réseau (103) ;
l'édition d'informations QoS (104) dans un en-tête du paquet (102) en se basant sur le quota QoS disponible et sur le quota QoS requis qui est requis pour acheminer le paquet (102) du premier nœud de réseau (100) jusqu'au deuxième nœud de réseau sélectionné (103s), de façon que les informations QoS (104) indiquent un premier quota QoS restant qui reste lorsque le paquet (102) a atteint le deuxième nœud de réseau sélectionné (103s) ; et
l'acheminement du paquet (102) vers le deuxième nœud de réseau sélectionné (103s).

15. Programme informatique comprenant un code de programme qui, lorsqu'il est exécuté par un processeur d'un nœud de réseau (100), amène le nœud de réseau (100) à exécuter le procédé (1200) selon la revendication 14.
